(19) Europäisches Patentamt
European Patent Office
Office européen des brevets

(11) **EP 4 660 879 A1**

(12) **EUROPEAN PATENT APPLICATION**

(43) Date of publication:
**10.12.2025 Bulletin 2025/50**

(21) Application number: **25181284.8**

(22) Date of filing: **06.06.2025**

(51) International Patent Classification (IPC):
**G06N 3/0455** (2023.01)    **G06N 3/0475** (2023.01)

(52) Cooperative Patent Classification (CPC):
**G06N 3/0455; G06N 3/0475**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.06.2024 US 202463657463 P**

(71) Applicant: **Google LLC
Mountain View, CA 94043 (US)**

(72) Inventors:
• **GUPTA, Agrim
Stanford (US)**
• **YAN, Zhiyao
San Francisco (US)**
• **SOHN, Kihyuk
Sunnyvale (US)**
• **ESSA, Irfan Aziz
Atanta (US)**
• **LEZAMA TORRES DE LA LLOSA, Jose
Atlanta (US)**

(74) Representative: **Varley, James Richard
Venner Shipley LLP
200 Aldersgate
London EC1A 4HD (GB)**

(54) **GENERATING TEMPORAL SEQUENCES USING DIFFUSION TRANSFORMER NEURAL NETWORKS**

(57) Methods, systems, and apparatus, including computer programs encoded on computer storage media, for generating a temporal sequence of data elements conditioned on an input. One of the methods includes obtaining the input, wherein the input comprises a noise input comprising a plurality of latent representations for the output temporal sequence; updating each latent representation using a latent denoising neural network; and generating the output temporal sequence of data elements by processing the updated latent representations using a decoder neural network.

FIG. 1A

FIG. 1B

## Description

BACKGROUND

This specification relates to processing inputs to generate temporal sequences using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

SUMMARY

This specification describes a system implemented as computer programs on one or more computers in one or more locations that generates temporal sequences conditioned on an input. A temporal sequence includes a respective data element at each of one or more time points. As an example, a temporal sequence can be a video. Each data element of the video can be a video frame (or image frame), such as a single still image that, when played in rapid succession with other frames, represents moving visual imagery or content.

Particular embodiments of the subject matter described in this specification can be implemented so as to realize one or more of the following advantages.

The system described in this specification generates high resolution temporal sequences of a variety of data elements, such as videos, audio, or climate data. Generating temporal sequences with high spatial and temporal resolution can provide for the coherent presentation of a larger amount of information compared to the generation of temporal sequences with lower spatial or temporal resolution. The temporal resolution for a video is referred to as frame rate, or the number of frames per second.

Generating high resolution temporal sequences while maintaining quality, temporal coherence, and alignment with the input is challenging. For example, some conventional systems for generating videos cannot generate videos of higher spatial resolution or temporal resolution than the spatial or temporal resolution of videos on which they were trained.

The system described in this specification can generate highly detailed and temporally consistent videos that have a high spatial resolution, a high temporal resolution, or both. As an example, the system described in this specification can generate videos with 768x1280 resolution and 24 frames per second.

Some conventional systems for generating high resolution and high frame rate videos require a cascaded diffusion model, which generally includes a series of diffusion models that are chained together to generate images, typically with increasing resolution after starting with a base diffusion model that operates at a low resolution. However, these conventional systems can have a limited ability to generate highly detailed and rich videos at the final resolution due to the low resolution generation in the first stage. **In** addition, there is typically a mismatch between the training and test distributions for a cascaded diffusion model, resulting in generating a low quality video at inference.

The system described in this specification can generate high-quality videos at a high resolution, high frame rate, or both, using a single latent diffusion model. By representing video frames into latent representations, and then further downsampling to a compressed latent space, the system can leverage the high correlation between video frames, especially in videos at high resolutions and frame rates, to more efficiently generate videos compared to systems with less extensive compression.

For example the system described in this specification encodes a sequence of tokens representing patches of each latent representation into an encoded representation that includes a sequence of input tokens, and processes the encoded representation to generate a merged sequence of output tokens. The merged sequence of output tokens includes a smaller number of tokens than the encoded representation. The system performs a majority of the processing, e.g., through a sequence of neural network blocks, on the sequence of output tokens to generate an updated sequence of output tokens. The system then generates an expanded representation from the updated sequence of output tokens, where the expanded representation has the same number of tokens as the encoded representation. By processing the shorter sequence of output tokens through the sequence of neural network blocks, the system performs a majority of computations on the shorter sequence, which requires less computing time and resources than processing a longer sequence of tokens, such as those included in the encoded representation and the expanded representation. Thus by leveraging downsampling and performing bulk computation on a shorter sequence, the system can generate high-quality videos without requiring a cascaded diffusion model.

The merged sequence of output tokens is a compressed representation of the latent representation. That is, the merged sequence of output tokens is a compressed representation of a segment of one or more video frames of the video. Therefore, by processing the shorter sequence of output tokens through the sequence of neural network blocks, the system can generate outputs such as videos using fewer computational resources such as memory and computing power compared to processing a longer sequence of tokens, such as tokens directly representing the latent representation or directly representing video frames.

In some examples, the system described in this specification can process the shorter sequence of output tokens using a smaller number of accelerators than are needed to process a longer sequence of tokens. Accelerators perform matrix operations using dedicated circuitries, e.g., ASICs, FPGAs, graphic processing units (GPUs), or tensor processing units (TPUs), and more particularly on distributed machine learning systems comprising multiple TPUs and/or GPUs. Some devices on which accelerators run have limited memory. By reducing the memory required to generate videos as described above, the system can be deployed on fewer accelerators, e.g., on a single accelerator, than would be needed to deploy existing video generation models. Thus, the system can be deployed on devices with limited memory such as a user device. By being deployed on fewer accelerators compared to existing video generation models, the system can also reduce the amount of power consumed to generate videos.

The system can perform a variety of video generation tasks, such as unconditional video generation and conditional video generation such as text-to-video generation, or video prediction. For example, the system can obtain an input that includes a conditioning signal that includes an embedding for text, and the output video is described by the text. As another example, the conditioning signal can include embeddings for one or more video frames. The output video includes a coherent continuation of the one or more video frames. The latent denoising neural network can update latent representations conditioned on the conditioning input.

Training of the system can be performed more efficiently, e.g., using fewer computational resources, compared to training a system directly on long videos, or videos at the target resolution, or both. For example, the system can be pre-trained on smaller and shorter videos, and fine-tuned on progressively larger spatial resolutions, larger temporal resolutions, or longer durations. For example, training the system initially at a base resolution and progressively fine-tuning the system at higher resolutions can be accomplished faster compared to training the system directly at a higher resolution.

In some implementations, the system can be trained to perform autoregressive generation using conditioning latent representations. For example, the system can be trained to generate a video conditioned on a latent representation to perform image to video generation. The system can also be trained to generate a video conditioned on multiple latent representations that provide the model with sufficient context to understand the direction of motion and produce consistent motion autoregressively.

In some implementations, the system can be trained to perform other sequence processing tasks. For example, the system can be trained to perform video and/or image classification and understanding tasks. As another example, the system can be trained to perform nonautoregressive generation. For example, the system can update multiple latent representations for the output temporal sequence in parallel.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1A is a block diagram of an example temporal sequence generation system.
FIG. 1B is a block diagram of another example temporal sequence generation system.
FIG. 2 is a flow diagram of an example process for generating a temporal sequence of data elements.
FIG. 3 is a flow diagram of an example process for generating a denoising output.
FIG. 4 shows an example latent denoising neural network.
FIG. 5 is a flow diagram of an example process for training an example latent denoising neural network.
FIG. 6 shows the performance of an example temporal sequence generation system.

Like reference numbers and designations in the various drawings indicate like elements.

DETAILED DESCRIPTION

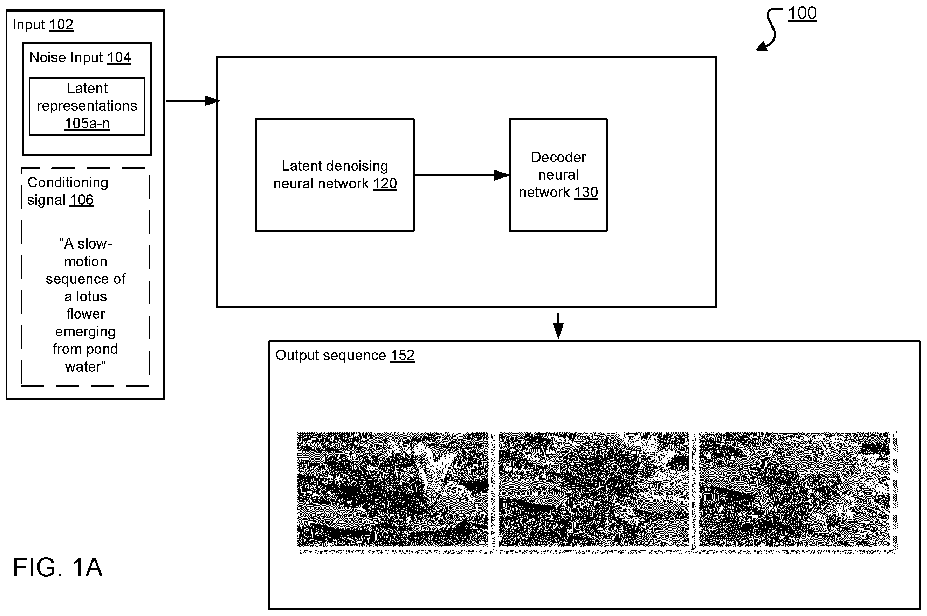

FIG. 1A shows an example temporal sequence generation system 100. The system 100 is an example of a system implemented as computer programs on one or more computers in one or more locations in which the systems, components, and techniques described below are implemented.

The system 100 generates an output temporal sequence 152 conditioned on an input 102.

The output temporal sequence 152 includes a respective data element at each of multiple time points. In the example of FIG. 1A, the output temporal sequence 152 can be a video. Each data element of the video can be a video frame, also referred to as an image frame. A video includes video frames that each include multiple pixels. Each pixel has one or more intensity values. The system can represent one or more video frames as a latent representation.

Although this specification describes generating videos as an example, the system can generate other types of temporal sequences of data elements, such as climate data, audio data, fluid mechanics data, etc. The system can be trained to generate a particular type of temporal sequence using appropriate training data. The system can also generate other sequences of data elements, such as three-dimensional images, high resolution images, audio signals, etc.

To generate a temporal sequence of data elements, the system obtains the input 102. The input 102 includes a noise input 104 that includes multiple latent representations 105a-n. Each latent representation can represent one or more data elements of the temporal sequence 152. Each latent representation is a representation in latent space of the one or more data elements. The latent space can have a lower dimensionality than the data elements. Each latent representation can include one or more latent variables.

In some examples, the system can generate the noise input 104 by sampling the noise input 104 from a noise distribution. For example, the system can initialize each latent representation by sampling an initial value for each latent variable included in the latent representation from a corresponding noise distribution, e.g., a Gaussian distribution or another predetermined distribution. The latent representation therefore includes multiple latent variables, with the initial value for each latent variable being sampled from a corresponding noise distribution.

In some examples, the input 102 also includes a conditioning signal 106, also referred to as a conditioning input. For example, the conditioning signal can include an embedding of text that describes what the output video should depict. For example, the text can describe spatial resolution and visual features such as level of detail, subject, background, timing, angle, lighting, contrast, type of shot, etc. In the example of FIG. 1A, the conditioning signal 106 includes an embedding of the text "A slow-motion sequence of a lotus flower emerging from pond water". In some examples, the system can receive the text from a user.

In some examples, the system can generate the embedding of the text from a natural language sequence of text, e.g., using a text encoder neural network. The text encoder neural network can have any appropriate neural network architecture, e.g., a feedforward architecture, e.g., an encoder-only Transformer neural network, or a recurrent architecture, that allows the neural network to map the natural language sequence of text to the embedding of the text. An embedding refers to an ordered collection of numerical values, e.g., a vector, matrix, or other tensor of numerical values. As a particular example, the system can include a T5 text encoder, described in further detail in Raffel et al., Exploring the Limits of Transfer Learning with a Unified Text-to-Text Transformer, arXiv preprint arXiv:1910.10683 (2019). As another example, the text encoder neural network can include a BERT encoder, described in further detail in Devlin et a., BERT: Pre-training of Deep Bidirectional Transformers for Language Understanding, arXiv preprint arXiv: 1810.04805 (2018).

While the specification describes the conditioning signal in the form of text (or an embedding of text), in other implementations, the conditioning signal can be a different type of data, e.g., a pre-existing temporal sequence of data elements, an embedding of a pre-existing temporal sequence of data elements, a pre-existing video, an embedding of a pre-existing video, an image, an embedding of an image, a numeric representation of a desired object category for the video, an audio signal characterizing a scene that the video should depict, an audio signal that includes speech that describes the video, an embedding of an audio signal, combinations thereof, and so on. The methods and systems disclosed herein can be applied to any conditioned temporal sequence generation.

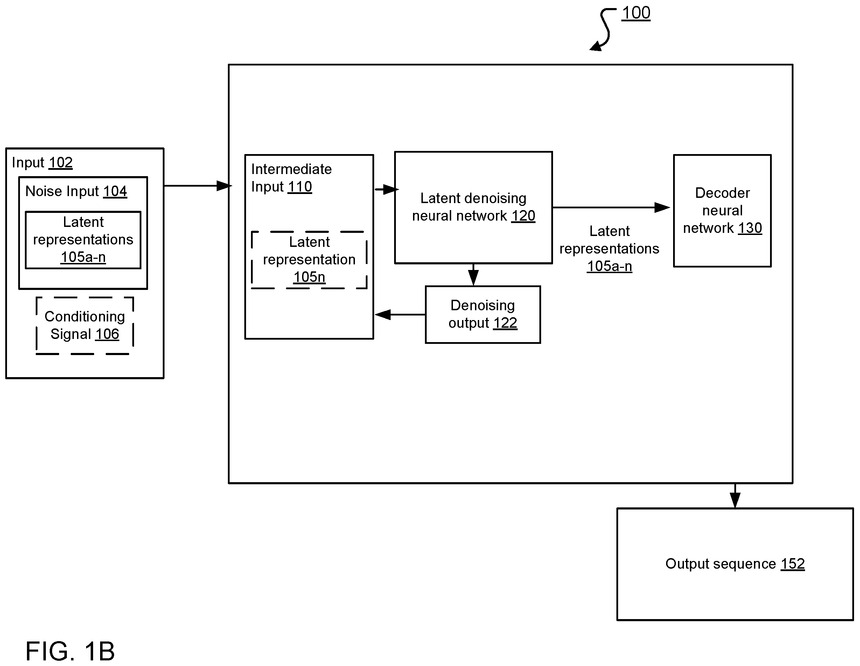

The system updates the latent representations 105a-n using a latent denoising neural network 120. The latent denoising neural network performs a reverse diffusion process to update each latent representation 105a-n at each of multiple iterations. In particular, for each latent representation 105a-n, the latent denoising neural network is configured to encode a sequence of tokens representing patches of the latent representation into an encoded representation that includes a sequence of input tokens. For each latent representation 105a-n, the system processes the encoded representation to generate a merged sequence of output tokens. The merged sequence of output tokens is shorter than the sequence of input tokens. The latent denoising neural network can perform the majority of the processing to update the latent representations 105a-n using the merged sequences of output tokens, which requires less computing time and resources than processing a longer sequence of tokens. The latent denoising neural network 120 is described in further detail below with reference to FIGS. 1B-4.

The system processes the latent representations 105a-n using a decoder neural network 130 to generate the output temporal sequence 152. The decoder neural network 130, also referred to as the temporal sequence decoder neural network, is described in further detail below with reference to FIG. 1B.

In the example of FIG. 1A, the output temporal sequence 152 for the input 102 includes a video that depicts the text of the conditioning signal 106. For example, FIG. 1A shows example frames of the video that depict "A slow-motion sequence of a lotus flower emerging from pond water." The video aligns with the textual prompt and displays temporal consistency and high resolution.

In some examples, the system 100 can provide the output temporal sequence 152 for presentation. The system can provide the output video for display, for example, to a user. Users can interact with the system, e.g., by providing inputs to the system by way of an interface, e.g., a graphical user interface, or an application programming interface (API). In particular, a user can provide an input that includes a conditioning signal. The system can provide the output video to the user, e.g., for display on a user device of the user, or for storage in a data storage device. In some cases, the system can transmit a generated video to a user device of the user, e.g., by way of a data communication network (e.g., the internet).

FIG. 1B shows the example temporal sequence generation system 100 described above with reference to FIG. 1A.

The system processes the input 102 using the latent denoising neural network 120 to generate updated latent representations 105a-n. The latent denoising neural network is configured to update, e.g., de-noise, each latent representation. For any given latent representation, the system performs a reverse diffusion process to update the latent representations.

For example, the latent denoising neural network 120 can update a first latent representation 105a by performing a reverse diffusion process. The latent denoising neural network 120 can update a second latent representation 105b by performing a reverse diffusion process conditioned on at least the first latent representation 105a.

In particular, the latent denoising neural network 120 performs a reverse diffusion process to update each latent representation 105a-n at each of multiple iterations.

At each iteration, the system processes an intermediate input 110 for the iteration that includes at least the latent representation to generate a denoising output 122.

In examples where the input 102 includes a conditioning signal 106, the intermediate input 110 at each iteration also includes the conditioning signal 106. The latent denoising neural network 120 updates the latent representation at each iteration conditioned on at least the conditioning signal 106.

In some examples, the denoising output 122 includes a noise estimate $\varepsilon$ for the latent representation. For example, the noise estimate defines how the actual latent representation, if known, would need to be modified to generate the latent representation given a noise level corresponding to the current iteration.

In some examples, the denoising output 122 includes an estimate of the actual latent representation $z_o$ given the current intermediate input 110, i.e., an estimate of the latent representation that would result from removing the noise component of the current intermediate input 110.

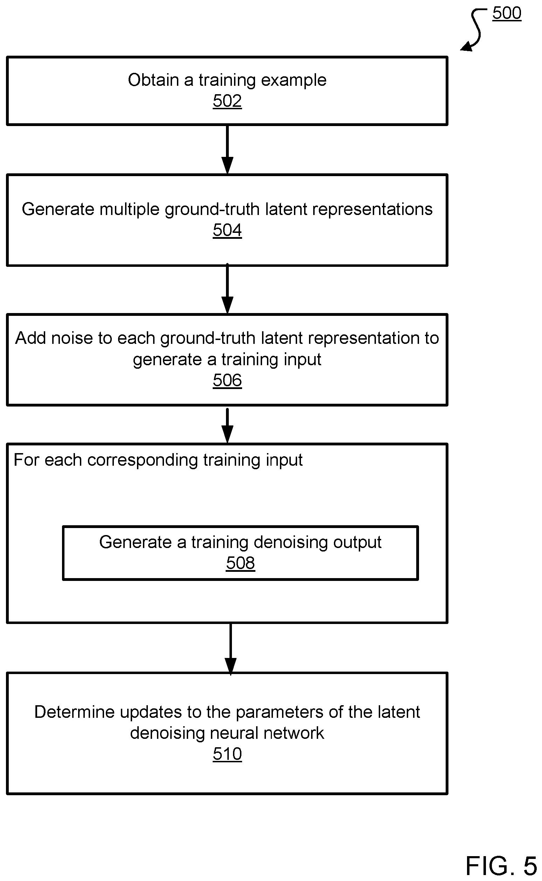

In some examples, the denoising output 122 includes an estimate of a v-prediction value that can be used to estimate the actual latent representation. An example of v-prediction is described below with reference to FIG. 5.

At each iteration, the system updates the latent representation using the denoising output 122 for the iteration. For example, the system modifies the latent representation using the denoising output 122.

The latent denoising neural network 120 can have any appropriate architecture for updating each latent representation. As an example, the latent denoising neural network can include a diffusion Transformer model. An example suitable diffusion Transformer model is described in Gupta et al., "Photorealistic Video Generation with Diffusion Models," arXiv preprint ar-

Xiv:2312.06662 (2023), which is hereby incorporated by reference in its entirety.

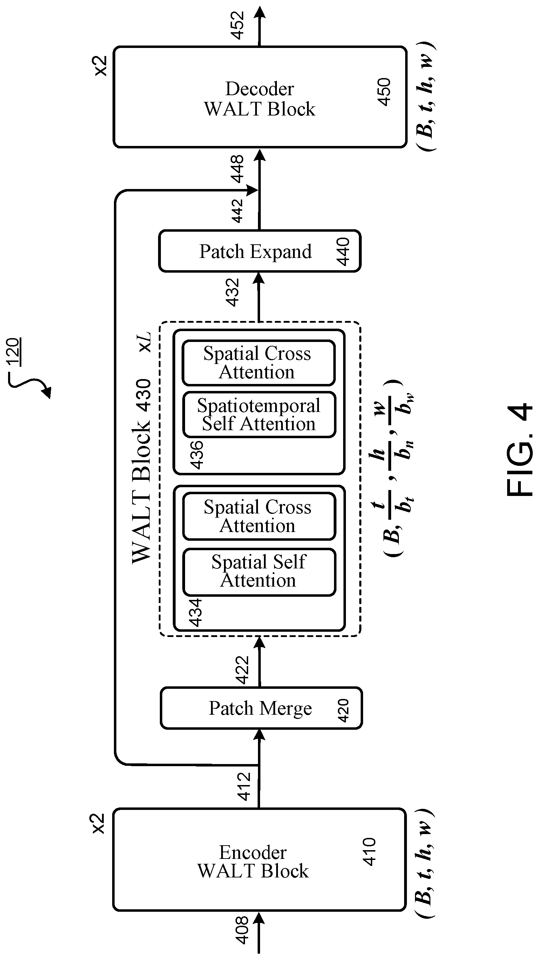

The latent denoising neural network can include multiple types of layers, including layers for performing attention, such as layer normalization layers, cross attention layers, feedforward layers, multi-head attention layers, MLP layers, etc. One example of the latent denoising neural network 120 is described in more detail below with reference to FIG. 4.

The system generates the output temporal sequence of data elements by processing the updated latent representations 105a-n using the temporal sequence decoder neural network 130. For example, the temporal sequence decoder neural network 130 can be configured to decode a latent representation to one or more video frames.

For example, the system can generate the output temporal sequence 152 of data elements by processing each latent representation 105a-n using the temporal sequence decoder neural network 130 to generate one or more respective video frames for the latent representation. The system can combine the respective video frames for each latent representation to generate the output temporal sequence 152 of data elements. The system can thus process multiple latent representations 105a-n in parallel, reducing the computing time required to decode the latent representations 105a-n compared to processing latent representations serially.

In some examples, the temporal sequence decoder neural network 130 can be the temporal sequence decoder neural network of an autoencoder for which the temporal sequence encoder neural network is configured to generate a latent representation for one or more data elements of a temporal sequence of data elements. For example, the temporal sequence decoder neural network 130 can be the decoder of a video autoencoder.

In some examples, the autoencoder can be a causal autoencoder. For example, the autoencoder can have a causal 3D convolutional neural network (CNN) encoder-decoder architecture. An example autoencoder is described in Yu et al., "Language Model Beats Diffusion - Tokenizer is Key to Visual Generation," arXiv preprint arXiv:2310.05737 (2024), and Gupta et al., "Photorealistic Video Generation with Diffusion Models," arXiv preprint arXiv:2312.06662 (2023).

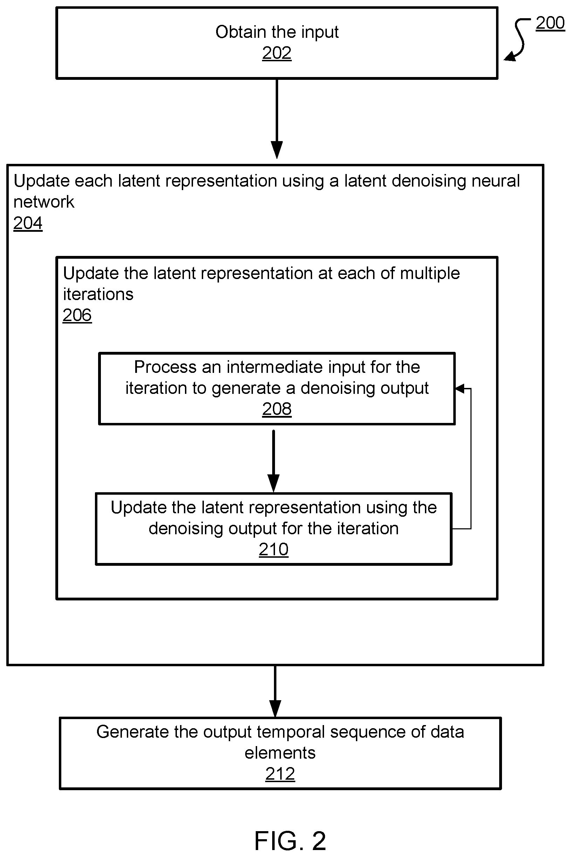

FIG. 2 is a flow diagram of an example process 200 for generating a temporal sequence of data elements conditioned on an input. For convenience, the process 200 will be described as being performed by a system of one or more computers located in one or more locations. For example, a temporal sequence generation system, e.g., the system 100 depicted in FIGS. 1A-1B, appropriately programmed in accordance with this specification, can perform the process 200.

The system obtains an input (step 202). The input includes a noise input that includes multiple latent representations for the output temporal sequence.

In some implementations, the system can sample the noise input from a noise distribution. For example, for each latent representation, the system can sample random noise from a noise distribution as $z_1 \sim \mathcal{N}(0, I)$. In some examples, the noise distribution can be a Gaussian distribution.

In some examples, the input can further include a conditioning signal. The conditioning signal can include further information for guiding the generation of the output temporal sequence of data elements. For example, the conditioning signal can include data representing text describing the output temporal sequence of data elements, data representing one or more data elements, etc.

In some examples, the data representing one or more data elements can include the one or more data elements, or embeddings representing the one or more data elements. In some examples, the system can generate embeddings representing the one or more data elements from the one or more data elements. For example, the system can process the one or more data elements using a temporal sequence encoder neural network. As an example, for one or more video frames, the system can process the one or more video frames using a video encoder, e.g., of an autoencoder.

The system updates each latent representation (step 204). For example, the system can update each latent representation using a latent denoising neural network. The latent denoising neural network is configured to update the latent representations. An example latent denoising neural network is described above with reference to FIG. 2.

In some examples, the latent denoising neural network can be configured to autoregressively update the latent representations. For example, each latent representation can have a position corresponding to one or more data elements of the output temporal sequence. The latent denoising neural network can update a particular latent representation conditioned on one or more preceding updated latent representations, e.g., latent representations that have already been updated for any previous positions of latent representations that preceded the particular position of the particular latent representation.

To update each latent representation, the system updates the latent representation at each of multiple iterations (step 206). At each iteration, the system performs steps 208-210.

The system processes an intermediate input for the iteration to generate a denoising output (step 208). The intermediate input for the iteration includes the latent representation. The denoising output can include, for example, a noise estimate $\varepsilon$. for the latent representation, an estimate of the actual latent representation given the intermediate input, or an estimate of a v-prediction value that can be used to estimate the actual latent representation.

In some examples, for each latent representation after the first latent representation, the intermediate input can include one or more preceding updated latent representations.

In examples where the input includes a conditioning signal, the intermediate input for the iteration includes the conditioning signal.

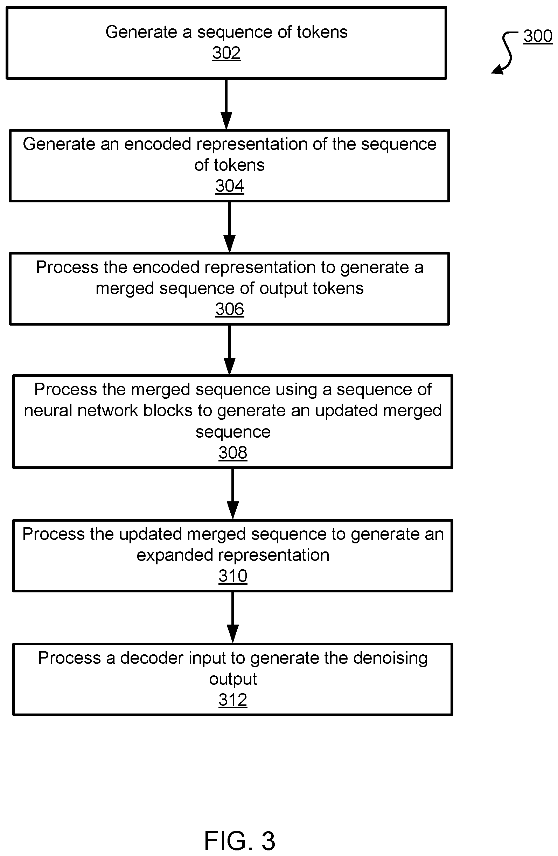

An example process for generating the denoising output is described in further detail below with reference to FIG. 3.

The system updates the latent representation using the denoising output for the iteration (step 210). For example, the system can update the latent representation, e.g., using any appropriate diffusion model state transition rule, e.g., DDIM (further details of which can be found in J. Song et al., Denoising Diffusion Implicit Models, ICLR 2021, which is hereby incorporated by reference in its entirety), DDPM (further details of which can be found in J. Ho et al., Denoising Diffusion Probabilistic Models, NeurIPS, 2020, which is hereby incorporated by reference in its entirety), or another appropriate state transition rule.

In some implementations, the system can use guidance when performing the reverse diffusion process. That is, the reverse diffusion process is sometimes a guided reverse diffusion process. In some examples, the guidance can be a classifier-free guidance.

Using classifier-free guidance can involve generating, by the latent denoising neural network, at any given iteration, multiple denoising outputs. In examples where the input includes the conditioning signal c, the system can generate a first denoising output for the iteration by processing an intermediate input that includes the conditioning signal. The system can generate a second denoising output for the iteration by processing an intermediate input that does not include the conditioning signal, e.g., includes a null value. The system can combine the first and second denoising outputs, e.g., according to a weighted sum, to generate a combined denoising output. The system can use the combined denoising output to update the latent representation.

The system generates the output temporal sequence of data elements (step 212). For example, the system can process the updated latent representations using a temporal sequence decoder neural network.

In some examples, the output temporal sequence of data elements is a video. Each data element is a video frame. In these examples, the temporal sequence decoder neural network can be configured to generate one or more video frames given a latent representation for the one or more video frames.

In some of these examples, the input can include a conditioning signal that represents text describing the output video. For example, the conditioning signal can include text describing the output video, or an embedding of text describing the output video.

In some examples, the system can generate the embedding of text describing the output video given the text describing the output video. For example, the system can process the text describing the output video using a text encoder such as a text encoder neural network. The text encoder neural network can have any appropriate neural network architecture, e.g., a feedforward architecture, e.g., an encoder-only Transformer neural network, or a recurrent architecture, that allows the neural network to map the natural language sequence of text to the embedding of the text. As an example, the text encoder can include a T5 text encoder.

FIG. 3 is a flow diagram of an example process 300 for generating a denoising output. For convenience, the process 300 will be described as being performed by a system of one or more computers located in one or more locations. For example, a temporal sequence generation system, e.g., the system 100 depicted in FIGS. 1A-1B, appropriately programmed in accordance with this specification, can perform the process 300. For example, the system can perform the process 300 as part of step 208 described above with reference to FIG. 2 to process the intermediate input for the iteration to generate the denoising output.

The system generates a sequence of tokens (step 302). Each token represents a respective patch of the latent representation.

In some examples, each respective patch can include a spatiotemporal region, e.g., a spatial region over one or more data elements represented by the latent representation. In some examples, each respective patch can include a spatial region of a particular data element represented by the latent representation. For example, the system can generate a sequence of non-overlapping $hp \times w_p$ patches where $h_p = h/p$, $w_p = w/p$ and p is the patch size. As a particular example, each respective patch can have a patch size of p=1, i.e., one patch per pixel per frame.

In some examples, to generate the tokens, the system can generate a respective patch embedding for each respective patch of the latent representation. For example, the system can divide the latent representation into a sequence of patches. The system can process each patch using one or more embedding layers to generate the respective patch embedding.

The system can generate one or more corresponding positional embeddings for each of the respective patch embeddings. The corresponding positional embeddings can be learnable or fixed. In some examples, the one or more corresponding positional embeddings can be derived from spatial positional embeddings and temporal positional embeddings. For example, the one or more positional embeddings can include a positional embedding that is the sum of a spatial positional embedding and a temporal positional embedding. As a particular example, the one or more positional embeddings can include a positional embedding that is the sum of normalized absolute positional embeddings for the height, width, and temporal axes.

In examples where the sequence of data elements includes one video frame, the system can add the temporal positional embedding corresponding to the latent representation for the video frame.

The system can generate the sequence of tokens by combining, for each respective patch embedding, the respective patch embedding and the one or more corresponding positional embeddings. For example, the system can add the respective patch embedding and the one or more corresponding positional embeddings. Representing a latent representation as a sequence of tokens is described in further detail in Dosovitskiy et al., An Image is Worth 16x16 Words: Transformers for Image Recognition at Scale, arXiv preprint arXiv:2010.11929 (2020).

The system generates an encoded representation of the sequence of tokens (step 304). The encoded representation includes a sequence of input tokens. For example, the sequence of input tokens can have the same number of tokens as the sequence of tokens. Each input token can correspond to a respective token, and can have updated values from the corresponding token.

For example, the system can use an encoder subnetwork to generate the encoded representation. The encoder subnetwork can include one or more neural network blocks. The neural network blocks operate on the full sequence length of the sequence of tokens that each represent a respective patch. Example neural network blocks are described in further detail below with reference to FIG. 4.

The system can thus perform processing on the full number of tokens using the encoder subnetwork. Processing the full number of tokens, each representing a smaller patch, can result in enhanced performance compared to processing a smaller sequence of tokens where each token represents a larger patch. Since processing the full number of tokens using the sequence of neural network blocks is computationally expensive, the system can perform processing on a smaller number of tokens as described below.

The system processes the encoded representation to generate a merged sequence of output tokens (step 306). The output tokens can have a same dimensionality as the input tokens. The merged sequence has a smaller number of tokens than a number of input tokens in the sequence of input tokens. The system can thus perform the processing of further steps using a smaller number of tokens than the full sequence length of the sequence of tokens that each represent a respective patch, reducing the computational resources that would otherwise be required to process a larger number of tokens. In particular, for larger models and longer sequences, neural network layers such as feedforward layers can consume a significant amount of memory.

For example, to generate the merged sequence, the system can generate multiple groups of input tokens from the sequence of input tokens. Each group can include multiple input tokens. As a particular example, the group can represent a local 3D block with dimensions $b_t$, $b_h$, $b_w$.

For each group, the system can concatenate the input tokens of the group. For each group, the system can apply a linear transformation to the concatenated input tokens to generate an initial output token.

In some examples, for each group, the system can add an average patch value to the initial output token to generate an output token for the group. For example, the average patch value can be an average of the input tokens of the group. The system can include the output token for each group in the merged sequence of output tokens.

The system processes the merged sequence using a sequence of neural network blocks to generate an updated merged sequence (step 308). The updated merged sequence includes a respective updated output token for each of the output tokens in the merged sequence.

Each neural network block can be configured to process the output tokens in the merged sequence to update the output tokens. Each neural network block can be configured to apply spatial self-attention, spatiotemporal self-attention, and/or cross attention. Example neural network blocks are described in further detail below with reference to FIG. 4.

By processing the merged sequence, which includes a fewer number of tokens than the sequence of tokens, the system can reduce the computational resources that would otherwise be required to process a larger number of tokens.

The system processes the updated merged sequence to generate an expanded representation (step 310). The expanded representation includes a same number of tokens as the number of input tokens in the sequence of input tokens.

To restore the number of tokens in the sequence to the number of input tokens in the sequence of input tokens, for each output token in the updated merged sequence, the system can apply a second linear transformation to the output token to generate a respective representation for the output token. The respective representation for the output token can have the same dimensionality as the concatenated input tokens described above.

For each respective representation, the system can split the respective representation for the output token into a group of multiple initial patch tokens. Each initial patch token can have the same dimensionality as the input tokens described above. The group corresponds to the output token.

In some examples, for each initial patch token in each group, the system can add the corresponding output token for the group to the initial patch token to generate an updated patch token. The system can include the updated patch tokens for each group in the expanded representation.

The system can thus restore the updated merged representation to have the same number of tokens as the number of input tokens, for further processing on the full number of tokens.

The system processes a decoder input to generate the denoising output (step 312). The decoder input can be derived from the expanded representation. For example, the decoder input can include a sequence of decoder input tokens. The decoder input can have a same number of tokens as the expanded representation and the encoded representation.

In some examples, the decoder input includes a combination of the expanded representation and the encoded representation. For example, the system can use a skip connection to combine the encoded representation and the expanded representation. As an example, the system can combine, e.g., add, each token of the expanded representation with a corresponding token of the encoded representation to generate a decoder input token of the sequence of decoder input tokens.

For example, the system can process the decoder input using a decoder subnetwork to generate the denoising output. The decoder subnetwork can include one or more neural network blocks. The neural network blocks operate on the full sequence length of the sequence of tokens that each represent a respective patch. Example neural network blocks are described below with reference to FIG. 4.

Processing the full number of tokens, each representing a smaller patch, can result in enhanced performance compared to processing a smaller sequence of tokens where each token represents a larger patch. Processing the full number of tokens using the sequence of neural network blocks is computationally expensive. Thus, processing the full number of tokens using a smaller number of neural network blocks, e.g., in the encoder subnetwork and the decoder subnetwork, and processing a smaller number of tokens using the sequence of neural network blocks, can achieve high performance while also reducing the computational resources that would otherwise be required to process the full number of tokens using the sequence of neural network blocks.

FIG. 4 shows an example latent denoising neural network 120 described above with reference to FIGS. 1A-1B. The latent denoising neural network 120 includes multiple neural network layers such as an encoder subnetwork 410, a patch merge layer 420, one or more neural network blocks 430, also referred to as WALT blocks, a patch expand layer 440, and a decoder subnetwork 450.

The system obtains a sequence of tokens 408 representing a video as described above with reference to FIG. 3.

The latent denoising neural network 120 processes the sequence of tokens 408 using the encoder subnetwork 410. The encoder subnetwork 410 is configured to generate an encoded representation 412 of the sequence of tokens 408. The encoder subnetwork 410 can include one or more neural network blocks such as the neural network blocks 430 described below. In the example of FIG. 4, the encoder subnetwork 410 includes two neural network blocks. For each of B latent representations in a batch, the encoder subnetwork can operate on a sequence of tokens representing the latent representation of dimensions (t, h, w).

The latent denoising neural network 120 processes the encoded representation 412 using the patch merge layer 420. The patch merge layer 420 is configured to generate a merged sequence of 422 output tokens from the encoded representation 412. For example, the patch merge layer 420 can perform the step 306 described above with reference to FIG. 3.

The merged sequence 422 of output tokens includes a smaller number of tokens than the encoded representation 412. For example, the patch merge layer 420 can generate an output token for each group of input tokens of the encoded representation 412. In the example of FIG. 4, each group can represent a local 3D block of dimensions $b_t$, $b_h$, $b_w$.

The latent denoising neural network 120 processes the merged sequence 422 using a sequence of neural network blocks 430 to generate an updated merged sequence 432. For each of B latent representations in a batch, each neural network block can operate on a sequence of output tokens representing the

$$\left(\frac{t}{b_t}, \frac{h}{b_h}, \frac{w}{b_w}\right)$$

local blocks. For example, the sequence of neural network blocks 430 can perform the step 308 described above with reference to FIG. 3.

The updated merged sequence 432 includes a respective updated output token for each of the output tokens in the merged sequence 422.

In the example of FIG. 4, the sequence of neural network blocks 430 can include L neural network blocks. The sequence of neural network blocks 430 can include any appropriate number of neural network blocks. In some examples, the sequence of neural network blocks 430 can include a larger number of neural network blocks than are included in the encoder subnetwork 410, the decoder subnetwork 450, or both. For example, the sequence of neural network blocks 430 can include 8, 10, 12, etc., neural network blocks.

In some examples, each neural network block is configured to apply spatial self-attention for the particular latent representation. For example, the latent representation can have a time dimension and two spatial dimensions. The system can partition the output tokens of the merged sequence into multiple spatial groups of output tokens, where each spatial group includes output tokens for a same time index of the time dimension. The system can apply attention over the output tokens of each spatial group.

For example, the latent denoising neural network 120 can process each spatial group of output tokens using the sequence of neural network blocks to update each output token. Each neural network block can be configured to apply attention over the output tokens of the spatial group with keys, values, and queries derived from the output tokens.

In some examples, each neural network block is configured to apply spatiotemporal self-attention for the particular latent representation. The system can partition the output tokens of the merged sequence into spatiotemporal groups of output tokens, where each spatiotemporal group includes output tokens for a same spatial region over multiple time indices of the time dimension. The system can apply attention over the output tokens of each spatiotemporal group.

For example, the latent denoising neural network 120 can process each spatiotemporal group of output tokens using the sequence of neural network blocks to update each output token. Each neural network block can be configured to apply attention over the output tokens of the spatiotemporal group with keys, values, and queries derived from the output tokens.

In these examples, each neural network block can apply a windowed attention mechanism for computational efficiency. For example, the system can use windowed attention layers to avoid full attention layers between a large number of patches.

In examples where the input includes a conditioning input, the sequence of neural network blocks is configured to apply attention over the conditioning signal and the output tokens of the merged sequence. For example, the latent denoising neural network can include multiple layers that are each configured to apply attention with keys and values derived from the conditioning signal and queries derived from the output tokens. For example, each neural network block can be configured to apply attention over the conditioning signal and the output tokens of the merged sequence to update the output tokens of the merged sequence with keys and values derived from the conditioning signal and queries derived from the output tokens of the merged sequence.

In some examples, each neural network block can perform spatial self-attention, cross attention, and spatiotemporal self-attention, in any kind of order. For example, each neural network block can perform spatial self-attention, cross attention, spatiotemporal self-attention, and cross attention. In some examples, some neural network blocks can perform different combinations of spatial self-attention, cross attention, and spatiotemporal self-attention. For example, some neural network blocks can perform spatial self-attention and spatiotemporal self-attention. In some examples, some neural network blocks can perform only spatial self-attention or only spatiotemporal self-attention.

Each neural network block can include multiple types of neural network layers for performing attention, such as layer normalization layers, cross attention layers, feedforward layers, multi-head attention layers, MLP layers, etc.

In the example of FIG. 4, the first neural network block 434 includes a spatial self-attention layer, followed by a spatial cross attention layer. The second neural network block 436 includes a spatiotemporal self-attention layer, followed by a spatial cross attention layer.

For example, the cross attention layer can perform cross-attention over the conditioning signal and the latent representation with keys and values derived from the conditioning signal and queries derived from the output tokens of the merged sequence. As a particular example, the cross attention layer can be a spatial cross attention layer that performs cross-attention over the conditioning signal and the latent representation with keys and values derived from the conditioning signal and queries derived from output tokens of the merged sequence that belong to a same spatial group.

In some examples, the latent denoising neural network 120 can use one or more of: absolute position embeddings, relative position embeddings, or rotary position embeddings (RoPE). As a particular example, the latent denoising neural network 120 can use absolute position embeddings and RoPE.

As an example, each neural network block can use rotary position embeddings (RoPE). The system can use rotary position embeddings to extrapolate to new sequence lengths, e.g., sequence lengths longer than those seen during training. Furthermore, in some cases, using RoPE can lead to lower training loss and faster adaptation to different spatial resolutions and temporal durations, as described in further detail below with reference to FIG. 5.

For example, each neural network block can receive a block input for the neural network block that includes the merged sequence of output tokens. For each output token, the neural network block can generate one or more rotary position embeddings. Each rotary position embedding can be generated by a rotation matrix. In some implementations where the neural network block generates more than one rotary position embedding, the rotary position embeddings can be generated using either different rotation matrices, or the same rotation matrix.. In some examples, the system can determine the rotation matrix based on the position of the output token in the merged sequence of output tokens and a set of frequencies.

The neural network block can process the output tokens and the rotary position embeddings by applying one or more attention mechanisms to generate a block output for the neural network block that includes a respective updated output token for each of the output tokens in the merged sequence. For example, the system can transform the query vector and the key vector of each output token using one or more rotary position embeddings when applying attention.

In some examples, the system can transform one or more sub-vectors of the key and query vectors using corresponding rotary position embeddings. As an example, the system can divide each of the query and key vectors into N sub-vectors. The system can divide the query and key vectors into N sub-vectors that each include a subset of the dimensions.

As a particular example, the query and key vectors can be 1024-dimensional vectors. The system can divide the query and key vectors into four sub-vectors, each having 256 dimensions.

One or more of the N sub-vectors can have a corresponding axis. In some examples, N can be greater than the number of axes of the temporal sequence.

For example, for a temporal sequence that is a video that has three axes, e.g., time, spatial width, and spatial height, N can have a value of four. The query and key vectors can each represent a patch in (t, x, y) coordinates. The system can transform a first sub-vector of the query vector and the key vector, respectively, along the time axis. The system can transform a second sub-vector of the query vector and the key vector, respectively, along the vertical y axis. The system can transform a third sub-vector of the query vector and the key vector, respectively, along the horizontal x axis. The system can leave the fourth sub-vector of the query vector and the key vector, respectively, untransformed. For example, the system can transform the sub-vectors by applying independent 1D rotary position embeddings, each corresponding to an axis, to each sub-vector.

The system processes the updated merged sequence 422 using the patch expand layer 440. The patch expand layer 440 is configured to generate an expanded representation 442 from the updated merged sequence 422 that includes a same number of tokens as the number of input tokens in the encoded representation 412. For example, the patch expand layer 440 can perform the step 310 described above with reference to FIG. 3.

The system processes a decoder input 448 using the decoder subnetwork 450. For example, the decoder input 448 can include a combination of the encoded representation 412 and the expanded representation 442.

The decoder subnetwork 450 is configured to generate a denoising output 452. The decoder subnetwork 450 can include one or more neural network blocks such as the neural network blocks 430. In some examples, the decoder subnetwork 450 can include one or more neural network layers that map the decoder input 448 to the latent space of the latent representation.

The encoder subnetwork and the decoder subnetwork can include one or more neural network blocks, similar to the neural network blocks 430 of the sequence described above. For example, the encoder subnetwork can perform one or more attention mechanisms over the sequence of tokens to generate the encoded representation. The decoder subnetwork can perform one or more attention mechanisms over the decoder input, that includes a sequence of tokens derived from the expanded representation, to generate the denoising output. In some examples, the decoder subnetwork can include an output subnetwork that processes an output of the last neural network block of the decoder subnetwork to generate the denoising output. As an example, the output subnetwork can be configured to project the output of the last neural network block of the decoder subnetwork to the denoising output.

For example, each neural network block can be configured to apply spatial self-attention, spatiotemporal self-attention, and/or cross attention.

For example, one or more neural network blocks can be configured to apply spatial self-attention for the particular latent representation. For example, the latent representation can have a time dimension and two spatial dimensions. For the encoder subnetwork, the system can partition the sequence of tokens into spatial groups of tokens, where each spatial group includes tokens for a same time index of the time dimension. The system can apply attention over the tokens of each spatial group. For the decoder subnetwork, the system can partition the decoder input into spatial groups of tokens. The system can apply attention over the tokens of each spatial group. For example, spatial window attention can be restricted to all tokens within a latent representation of size $1 \times h_p \times w_p$, where the first dimension is time.

In some examples, one or more neural network blocks can be configured to apply spatiotemporal self-attention for the particular latent representation. For the encoder subnetwork, the system can partition the sequence of tokens into spatiotemporal groups of tokens, where each spatiotemporal group includes tokens for a same spatial region over multiple time indices of the time dimension. The system can apply attention over the tokens of each spatiotemporal group. For the decoder subnetwork, the system can partition the decoder input into spatiotemporal groups of tokens. The system can apply attention over the tokens of each spatiotemporal group. For example, spatiotemporal window attention can be restricted to tokens within a 3D window of size

$$(1 + t) \times h_p' \times h_w' \text{, with } h_p' < h_p, w_p' < w_p.$$

In some examples where the input includes a conditioning input, each neural network block of the encoder subnetwork is configured to apply attention over the conditioning signal and the sequence of tokens. In some examples, each neural network block of the decoder subnetwork is configured to apply attention over the conditioning signal and the decoder input.

In some examples, each neural network block of the encoder subnetwork, the decoder subnetwork, or both, can use rotary position embeddings (RoPE). For example, each neural network block of the encoder subnetwork can receive a block input for the neural network block that includes the sequence of tokens 408. For each token, the neural network block can generate a rotary position embedding using a rotation matrix. The neural network block can process the tokens and the rotary position embeddings by applying one or more attention mechanisms to generate a block output for the neural network block that includes a respective updated token for each of the tokens in the sequence. For example, the system can transform the query vector and the key vector of each token using one or more rotary position embeddings when applying attention. Rotary position embeddings are described in further detail above.

As another example, each neural network block of the decoder subnetwork can receive a block input for the neural network block that includes the decoder input 448. For each decoder input token of the decoder input 448, the neural network block can generate a rotary position embedding using a rotation matrix. The neural network block can process the decoder input tokens and the rotary position embeddings by applying one or more attention mechanisms to generate a block output for the neural network block that includes a respective updated token for each of the decoder input tokens in the decoder input 448. For example, the system can transform the query vector and the key vector of each decoder input token using one or more rotary position embeddings when applying attention. Rotary position embeddings are described in further detail above.

FIG. 5 is a flow diagram of an example process 500 for training an example latent denoising neural network. For convenience, the process 500 will be described as being performed by a system of one or more computers located in one or more locations. For example, a temporal sequence generation system, e.g., the system 100 depicted in FIGS. 1A-1B, or a separate training system, appropriately programmed in accordance with this specification, can perform the process 500.

The system can perform the process 500 repeatedly to train the latent denoising neural network. For example, the system can perform the process 500 for multiple training examples.

The system obtains a training example (step 502). The training example includes a training temporal sequence of data elements. In some examples, the training temporal sequence of data elements includes one data element.

In some examples, the training example includes a training conditioning input. The training conditioning input can include one or more conditioning latent representations.

The training example includes (i) a respective training temporal sequence of data elements that includes one or more training data elements and (ii) a training conditioning signal. In some examples, the training conditioning signal can include text, an embedding of text, one or more data elements, embeddings for one or more data elements, or a null value.

The system generates one or more ground-truth latent representations (step 504). Each ground-truth latent representation can represent one or more data elements of the training temporal sequence of data elements.

For example, the system can generate each ground-truth latent representation for the training temporal sequence of data elements using a temporal sequence encoder neural network. As an example, the temporal sequence encoder neural network can be the temporal sequence encoder neural network of an autoencoder, for which the temporal sequence decoder neural network is configured to reconstruct the training temporal sequence of data elements.

For example, the ground-truth latent representation z can be determined as

$$\mathbf{z} = E(\mathbf{x}) \in \mathbb{R}^{t \times h \times w \times d}$$

, where $E(x)$ is the temporal sequence encoder neural network, $x$ is the training temporal sequence of data elements, and $f_t = T/t$ and $f_s = H/h = W/w$ are the temporal and spatial compression factors.

In some examples, the system can perform the process 500 after training the temporal sequence encoder neural network, the temporal sequence decoder neural network, or both. Training the temporal sequence encoder neural network and the temporal sequence decoder neural network is described in further detail below.

The system adds noise to each ground-truth latent representation to generate a training input (step 506). For example, the system can sample a diffusion timestep $t \in [0, 1]$ that corresponds with a noise level. The system can sample noise $\varepsilon \sim \mathcal{N}(0, I)$ from a noise distribution, e.g., from a Gaussian distribution. The system can add the noise to the ground-truth latent representation in accordance with the diffusion timestep to create the training input. In some examples, the system can scale the noise based on the noise schedule for the sampled diffusion timestep t. For example, the training input can be described as

$$\mathbf{z}_t = \sqrt{\gamma(t)} \, \mathbf{z_0} + \sqrt{1 - \gamma(t)} \, \varepsilon,$$

, where $\gamma(t)$ is a noise schedule, e.g., a monotonically decreasing function from 1 to 0, and $z_0$ is the ground-truth latent representation.

For each training input, the system generates a training denoising output (step 508). For example, the system can generate a training denoising output from the training input by processing a training intermediate input that includes the training input using the latent denoising neural network in accordance with current values of the parameters of the latent denoising neural network.

In some examples, the training intermediate input can include the training conditioning signal.

The system determines updates to the parameters of the latent denoising neural network (step 510). For example, the system can determine updates to the parameters that optimize a training objective.

For example, the training objective can measure an error between a target w and the denoising output generated by processing the training intermediate input in step 508. As an example, the system can train the latent denoising neural network to optimize the denoising

objective $\mathbb{E}_{\mathbf{z} \sim p_{data}, t \sim \mathcal{U}(0,1), \varepsilon \sim \mathcal{N}(0,I)} \left[ \left\| \mathbf{w} - f_\theta(\mathbf{z_t}; \mathbf{c}, t) \right\|^2 \right]$,

where c is the conditioning signal, $z_t$ is the training input, t is the diffusion timestep, and $f_\theta$ is the latent denoising neural network. The target w can be, for example, the noise $\varepsilon$, the ground-truth latent representation $z_0$, or the v-

prediction value. In some examples, the v-prediction value can be described as

$$\mathbf{v} = \sqrt{1 - \gamma(t)} \, \varepsilon - \sqrt{\gamma(t)} \, \mathbf{z_0}.$$

In some examples, the training objective measures an error between the ground-truth latent representation and a denoised representation generated using the training denoising output.

In some examples, the system can further train, e.g., fine-tune, the latent denoising neural network. For example, the latent denoising neural network can have been trained on smaller, shorter videos at a base resolution. The system can fine-tune the latent denoising neural network on tuning examples that include temporal sequences of one or more of: larger spatial resolutions, larger temporal resolutions, or longer durations, compared to the temporal sequences the latent denoising neural network was trained on. In some examples, the system can fine-tune the latent denoising neural network at the target resolution and duration for inference.

In some examples, the system can fine-tune the latent denoising neural network at progressively larger resolutions and longer durations. For each increase in resolution, duration, or both, the system can interpolate the absolute position embeddings and scale the window sizes. For example, the system can fine-tune the latent denoising neural network sequentially on sets of tuning examples that have one or more of: different spatial resolutions, different temporal resolutions, or different durations. The sets of tuning examples can be ordered by increasing spatial resolutions, temporal resolutions, or durations in a sequence of sets of tuning examples. For example, the sequence can start with sets of tuning examples that have lower spatial resolutions, temporal resolutions, or durations.

The system thus consumes fewer computational resources to train the latent denoising neural network to generate videos of larger resolutions, longer durations, or both, compared to training the latent denoising neural network on larger resolutions or durations from scratch directly. For example, a latent denoising neural network trained progressively can be trained faster at the base resolution compared to training a latent denoising neural network directly at the target resolution. Furthermore, under a fixed computational budget, training faster at the base resolution allows for extended training of the latent denoising neural network, or more prolonged fine-tuning at the target resolution. Furthermore, in examples where the neural network blocks use rotary position embeddings, the latent denoising neural network can adapt faster, e.g., achieve a threshold performance on videos of larger resolutions, longer durations, or both, using fewer training iterations or less computing time.

As another example, the system can fine-tune the latent denoising neural network on tuning examples that include high-quality temporal sequences. For example, the system can select high-quality videos from a training dataset of videos. The system can determine the quality of the video based on the motion exhibited in the video. For example, the system can use a pre-trained optical flow model to determine a measure of movement between video frames in the video. The system can select videos for inclusion in the tuning examples that exhibit movement that satisfies a threshold measure of movement. For example, the system can filter out videos that exhibit either too little motion or motion that is too fast, e.g., has a measure of movement that falls outside a threshold range. The system can thus enhance the latent denoising neural network's ability to generate temporally consistent videos.

In some examples, the system can train the latent denoising neural network jointly on text-image pairs and text-video pairs. In some examples, the text can be represented by text embeddings. For example, one or more of the training examples can include an image, and a training conditioning signal that represents text describing the image. One or more of the training examples can include a video, and a training conditioning signal that represents text describing the video. The system can thus train the latent denoising neural network to perform text-conditioned image and video generation.

Alternatively or in addition, the system can train the latent denoising neural network on the task of frame prediction. For example, for one or more of the training examples, the training conditioning signal can include one or more conditioning latent representations. Each conditioning latent representation can represent one or more data elements. In some examples, the system can randomly sample the number of conditioning latent representations, e.g., from a range of 1 to n conditioning latent representations. Conditioning on a single conditioning latent representation that represents one video frame can allow the latent denoising neural network to perform image-to-video generation. Conditioning on more than one conditioning latent representation can provide the latent denoising neural network with sufficient context to understand the direction of motion and produce consistent motion autoregressively, based on the training latent representations. The system can thus train the latent denoising neural network to perform long video generation using autoregressive prediction.

In some examples, the system can train the temporal sequence decoder neural network, the temporal sequence encoder neural network, or both. In some examples, the temporal sequence decoder neural network, the temporal sequence encoder neural network, or both, can be trained and frozen prior to the training of the latent denoising neural network.

In some examples, the temporal sequence decoder neural network and the temporal sequence encoder neural network are part of an autoencoder. In examples where the temporal sequence generation system generates videos, the autoencoder can be trained to reconstruct images, videos, or both.

The system can train the autoencoder on training images, training videos, or both. In some examples, the training images, training videos, or both, can be derived from a training set of videos. As an example, the training videos can have a lower resolution than the videos in the training set of videos. For example, the training videos can include crops from the videos in the training set of videos. Alternatively or in addition, the training videos can be resized from the videos in the training set of videos. In examples where the autoencoder is a CNN-based autoencoder, the system can leverage the shift-equivariance property of CNNs to enable the autoencoder to generalize effectively when applied to higher resolutions by training the autoencoder using crops or resized videos.

In some examples, the system can train the autoencoder on shorter training videos than the video being generated at inference. The system can fine-tune the autoencoder on longer videos than the training videos. Thus, the system can train the autoencoder on short videos, which allows for faster training and fewer consumption of computational resources that would otherwise be used to train on long videos.

For example, the autoencoder can be trained to optimize one or more of a pixel-level reconstruction loss (e.g., mean-squared error), perceptual loss, or adversarial loss. In some examples, the autoencoder can be trained with a combination, e.g., sum, of the pixel-level reconstruction loss, perceptual loss, and adversarial loss.

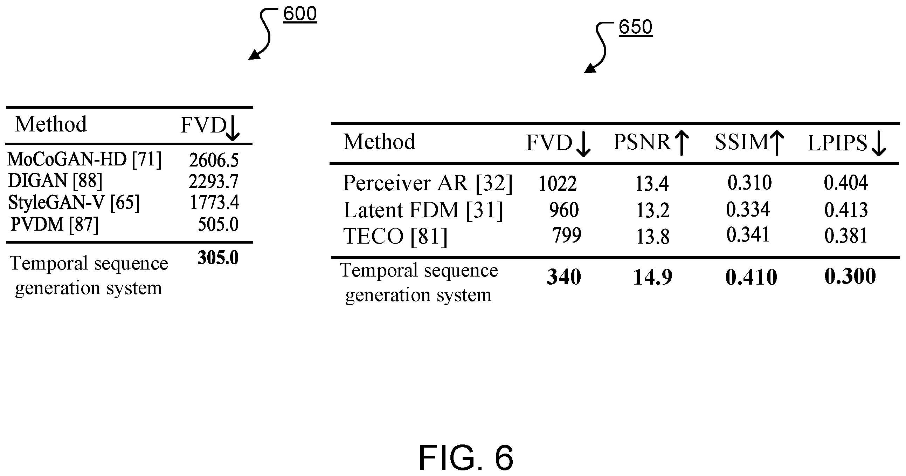

FIG. 6 shows the performance of an example temporal sequence generation system. In particular, FIG. 6 shows the performance of a variety of techniques on video generation tasks in terms of Frechet Video Distance (FVD), peak signal-to-noise ratio (PSNR), structural similarity index measure (SSIM), and a perceptual metric (LPIPS), which are metrics for evaluating the quality of generated videos.

As can be seen from table 600, the temporal sequence generation system described in this specification (labeled as "temporal sequence generation system") outperforms other video generation techniques on FVD (lower is better) for the unconditional video generation task with a length of 128 frames. FVD measures the quality and realism of generated videos by comparing the distributions of generated video representations to those of real video data.

As can be seen from table 650, the temporal sequence generation system described in this specification outperforms other video generation techniques on FVD (lower is better), PSNR (higher is better), SSIM (higher is better), and LPIPS (lower is better) for the conditional video generation task of predicting 80 frames conditioned on 20 frames. In particular, the temporal sequence generation system described in this specification outperforms the TECO technique, despite having less than half the number of parameters. In addition, FIG. 6 shows the performance of the temporal sequence generation system described in this specification obtained without progressive training or high spatio-temporal compression. Thus even without progressive training or high spatio-temporal compression, the system can train sequence lengths of more than 10,000 latent representations, or more than 128 video frames, without requiring a large amount of accelerator memory.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a key vectorboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework or a Jax framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

This specification also includes the following clauses:

Clause 1. A computer-implemented method of generating an output temporal sequence of data elements conditioned on an input, the method comprising: obtaining the input, wherein the input comprises a noise input comprising a plurality of latent representations for the output temporal sequence; updating each latent representation using a latent denoising neural network, wherein the latent denoising neural network is configured to update the latent representations, the updating comprising: updating the latent representation at each of a plurality of iterations, wherein the updating comprises, at each iteration: processing an intermediate input for the iteration comprising the latent representation to generate a denoising output, the processing comprising: generating a sequence of tokens each representing a respective patch of the latent representation; generating an encoded representation of the sequence of tokens, the encoded representation comprising a sequence of input tokens; processing the encoded representation to generate a merged sequence of output tokens, wherein the merged sequence has a smaller number of output tokens than a number of input tokens in the sequence of input tokens; processing the merged sequence using a sequence of neural network blocks to generate an updated merged sequence that includes a respective updated output token for each of the output tokens in the merged sequence; processing the updated merged sequence to generate an expanded representation that includes a same number of tokens as the number of input tokens in the sequence of input tokens; and processing a decoder input derived from the expanded representation to generate the denoising output; updating the latent representation using the denoising output for the iteration; and generating the output temporal sequence of data elements by processing the updated latent representations using a decoder neural network.

Clause 2. The method of clause 1, wherein the latent denoising neural network is configured to autoregressively update the latent representations, and wherein for each latent representation other than a first latent representation, the intermediate input comprises one or more preceding updated latent representations.

Clause 3. The method of any preceding clause, wherein processing the encoded representation to generate a merged sequence of output tokens comprises: generating, from the sequence of input tokens, a plurality of groups of input tokens, wherein each group comprises a plurality of input tokens; concatenating, for each group, the input tokens of the group; and for each group, applying a linear transformation to the concatenated input tokens to generate an initial output token.

Clause 4. The method of clause 3, further comprising: for each group, adding an average patch value to the initial output token to generate an output token for the group, wherein the average patch value is an average of the input tokens of the group; and including the output token for each group in the merged sequence of output tokens.

Clause 5. The method of any of clauses 3-4, wherein processing the updated merged sequence to generate an expanded representation comprises: for each output token in the updated merged sequence, applying a second linear transformation to the output token to generate a respective representation for the output token; and for each respective representation, splitting the respective representation into a group of a plurality of initial patch tokens, wherein the group corresponds to the output token.

Clause 6. The method of clause 5, further comprising: for each initial patch token in each group, adding the corresponding output token for the group to the initial patch token to generate an updated patch token; and including the updated patch tokens for each group in the expanded representation.

Clause 7. The method of any preceding claim, wherein the latent representation has a time dimension and two spatial dimensions, and wherein processing the merged sequence using a sequence of neural network blocks to generate an updated merged sequence comprises: partitioning the output tokens of the merged sequence into a plurality of spatial groups of output tokens, wherein each spatial group comprises output tokens for a same time index of the time dimension; and processing each spatial group of output tokens using the sequence of neural network blocks to update each output token, wherein each neural network block is configured to apply attention over the output tokens of the spatial group with keys, values, and queries derived from the output tokens.

Clause 8. The method of clause 7, wherein processing the merged sequence using a sequence of neural network blocks to generate an updated merged sequence comprises: partitioning the output tokens of the merged sequence into a plurality of spatiotemporal groups of output tokens, wherein each spatiotemporal group comprises output tokens from a same spatial region across multiple time indices of the time dimension; and processing each spatiotemporal group of output tokens using the sequence of neural network blocks to update each output token, wherein each neural network block is configured to applying attention over the output tokens of the spatiotemporal group with keys, values, and queries derived from the output tokens.

Clause 9. The method of any preceding clause, wherein each neural network block is configured to: receive a block input for the neural network block that comprises the merged sequence of output tokens; for each output token, generate a rotary position embedding using a rotation matrix; and process the output tokens and the rotary position embeddings by applying one or more attention mechanisms to generate a block output for the neural network block that includes a respective updated output token for each of the output tokens in the merged sequence.

Clause 10. The method of any preceding clause, wherein the decoder input comprises a combination of the expanded representation and the encoded representation.

Clause 11. The method of any preceding clause, wherein the input further comprises a conditioning signal, and wherein the intermediate input further comprises the conditioning signal.

Clause 12. The method of clause 11, wherein each neural network block is configured to apply attention over the conditioning signal and the output tokens of the merged sequence to update the output tokens of the merged sequence with keys and values derived from the conditioning signal and queries derived from the output tokens of the merged sequence.

Clause 13. The method of any preceding clause, wherein obtaining the input comprises sampling the noise input from a noise distribution.

Clause 14. The method of any preceding clause, wherein generating the sequence of tokens each representing a respective patch of the latent representation comprises: generating a respective patch embedding for each respective patch of the latent representation; generating one or more corresponding positional embeddings for each of the respective patch embeddings; and generating the sequence of tokens by combining, for each respective patch embedding, the respective patch embedding and the one or more corresponding positional embeddings.

Clause 15. The method of clause 14, wherein the one or more corresponding positional embeddings are derived from spatial positional embeddings and temporal positional embeddings.

Clause 16. The method of any of clauses 14-15, wherein each respective patch comprises a spatio-temporal region over one or more data elements represented by the latent representation.

Clause 17. The method of any of clauses 14-15, wherein each respective patch comprises a spatial region of a particular data element represented by the latent representation.

Clause 18. The method of any preceding clause, wherein the decoder neural network has been trained and frozen prior to training the latent denoising neural network.

Clause 19. The method of any preceding clause, wherein the latent denoising neural network has been trained by repeatedly: obtaining a training example comprising a training temporal sequence of data elements; generating a plurality of ground-truth latent representations for the training temporal sequence of data elements using an encoder neural network; adding noise to each ground-truth latent representation to generate a training input; for each training input: generating a training denoising output from the training input by processing a training intermediate input comprising the training input using the latent denoising neural network in accordance with current values of the parameters of the latent denoising neural network; and determining updates to the parameters of the latent denoising neural network that optimize a training objective.

Clause 20. The method of clause 19, wherein the training objective measures an error between the ground-truth latent representation and a denoised representation generated using the training denoising output.

Clause 21. The method of any of clauses 19-20, further comprising fine-tuning the latent denoising neural network.

Clause 22. The method of any of clauses 19-21, wherein the training example further comprises a training conditioning input, and wherein the training conditioning input comprises one or more conditioning latent representations.

Clause 23. The method of any of clauses 19-22, wherein the respective training temporal sequence of data elements comprises one data element.

Clause 24. The method of any preceding clause, wherein the output temporal sequence of data elements is a video, and wherein each data element is a video frame.

Clause 25. The method of clause 24, wherein the input comprises a conditioning input, and wherein the conditioning input comprises an embedding of text describing the video.

Clause 26. The method of any of clauses 24-25, wherein the decoder neural network is configured to generate one or more video frames given a latent representation for the one or more video frames.

Clause 27. A system comprising one or more computers and one or more storage devices storing instructions that are operable, when executed by the one or more computers, to cause the one or more computers to perform the operations of the respective method of any of clauses 1-26.

Clause 28. A computer storage medium encoded with instructions that, when executed by one or more computers, cause the one or more computers to perform the operations of the respective method of any of clauses 1 - 26.

## Claims

1. A computer-implemented method of generating an output temporal sequence of data elements conditioned on an input, the method comprising:

    obtaining the input, wherein the input comprises a noise input comprising a plurality of latent representations for the output temporal sequence;

updating each latent representation using a latent denoising neural network, the updating comprising:

updating the latent representation at each of a plurality of iterations, comprising, at each iteration:

processing an intermediate input for the iteration comprising the latent representation to generate a denoising output, the processing comprising:

generating a sequence of tokens each representing a respective patch of the latent representation;

generating an encoded representation of the sequence of tokens, the encoded representation comprising a sequence of input tokens;

processing the encoded representation to generate a merged sequence of output tokens, wherein the merged sequence has a smaller number of output tokens than a number of input tokens in the sequence of input tokens;

processing the merged sequence using a sequence of neural network blocks to generate an updated merged sequence that includes a respective updated output token for each of the output tokens in the merged sequence;

processing the updated merged sequence to generate an expanded representation that includes a same number of tokens as the number of input tokens in the sequence of input tokens; and

processing a decoder input derived from the expanded representation to generate the denoising output;

updating the latent representation using the denoising output for the iteration; and

generating the output temporal sequence of data elements by processing each of the updated latent representations using a decoder neural network.

2. The method of claim 1, wherein the latent denoising neural network is configured to autoregressively update the latent representations, and wherein for each latent representation other than a first latent representation, the intermediate input comprises one or more preceding updated latent representations.

3. The method of any preceding claim, wherein processing the encoded representation to generate a merged sequence of output tokens comprises:

generating, from the sequence of input tokens, a plurality of groups of input tokens, wherein each group comprises a plurality of input tokens;

concatenating, for each group, the input tokens of the group; and

for each group, applying a linear transformation to the concatenated input tokens to generate an initial output token.

4. The method of claim 3, further comprising:

for each group, adding an average patch value to the initial output token to generate an output token for the group, wherein the average patch value is an average of the input tokens of the group; and

including the output token for each group in the merged sequence of output tokens.

5. The method of any of claims 3-4, wherein processing the updated merged sequence to generate an expanded representation comprises:

for each output token in the updated merged sequence, applying a second linear transformation to the output token to generate a respective representation for the output token; and

for each respective representation, splitting the respective representation into a group of a plurality of initial patch tokens, wherein the group corresponds to the output token.

6. The method of claim 5, further comprising:

for each initial patch token in each group, adding the corresponding output token for the group to the initial patch token to generate an updated patch token; and

including the updated patch tokens for each group in the expanded representation.

7. The method of any preceding claim, wherein the latent representation has a time dimension and two spatial dimensions, and wherein processing the merged sequence using a sequence of neural network blocks to generate an updated merged sequence comprises:

partitioning the output tokens of the merged sequence into a plurality of spatial groups of output tokens, wherein each spatial group comprises output tokens for a same time index of the time dimension; and

processing each spatial group of output tokens using the sequence of neural network blocks to update each output token, wherein each neural network block is configured to apply attention over the output tokens of the spatial group with keys, values, and queries derived from the output tokens.

8. The method of claim 7, wherein processing the merged sequence using a sequence of neural network blocks to generate an updated merged sequence comprises:

partitioning the output tokens of the merged sequence into a plurality of spatiotemporal groups of output tokens, wherein each spatiotemporal group comprises output tokens from a same spatial region across multiple time indices of the time dimension; and
processing each spatiotemporal group of output tokens using the sequence of neural network blocks to update each output token, wherein each neural network block is configured to applying attention over the output tokens of the spatiotemporal group with keys, values, and queries derived from the output tokens.

9. The method of any preceding claim, wherein each neural network block is configured to:

receive a block input for the neural network block that comprises the merged sequence of output tokens;
for each output token, generate a rotary position embedding using a rotation matrix; and
process the output tokens and the rotary position embeddings by applying one or more attention mechanisms to generate a block output for the neural network block that includes a respective updated output token for each of the output tokens in the merged sequence .

10. The method of any preceding claim, wherein the input further comprises a conditioning signal, and wherein the intermediate input further comprises the conditioning signal, optionally wherein each neural network block is configured to apply attention over the conditioning signal and the output tokens of the merged sequence to update the output tokens of the merged sequence with keys and values derived from the conditioning signal and queries derived from the output tokens of the merged sequence.

11. The method of any preceding claim, wherein generating the sequence of tokens each representing a respective patch of the latent representation comprises:

generating a respective patch embedding for each respective patch of the latent representation;
generating one or more corresponding positional embeddings for each of the respective patch embeddings; and
generating the sequence of tokens by combining, for each respective patch embedding, the respective patch embedding and the one or more corresponding positional embeddings.

12. The method of claim 11, wherein the one or more corresponding positional embeddings are derived from spatial positional embeddings and temporal positional embeddings, optionally wherein each respective patch comprises a spatiotemporal region over one or more data elements represented by the latent representation or wherein each respective patch comprises a spatial region of a particular data element represented by the latent representation.

13. The method of any preceding claim, wherein the output temporal sequence of data elements is a video, and wherein each data element is a video frame.

14. A system comprising one or more computers and one or more storage devices storing instructions that are operable, when executed by the one or more computers, to cause the one or more computers to perform the operations of the respective method of any of claims 1- 13.

15. A computer storage medium encoded with instructions that, when executed by one or more computers, cause the one or more computers to perform the operations of the respective method of any of claims 1 - 13.

**FIG. 1A**

100

Input 102

Noise Input 104

Latent representations 105a-n

Conditioning signal 106

"A slow-motion sequence of a lotus flower emerging from pond water"

Latent denoising neural network 120

Decoder neural network 130

Output sequence 152

FIG. 1B

Obtain the input
202

200

Update each latent representation using a latent denoising neural network
204

Update the latent representation at each of multiple iterations
206

Process an intermediate input for the iteration to generate a denoising output
208

Update the latent representation using the denoising output for the iteration
210

Generate the output temporal sequence of data elements
212

FIG. 2

FIG. 3

FIG. 4

500

```
┌─────────────────────────────────────────────────┐
│           Obtain a training example              │
│                      502                          │
└─────────────────────────────────────────────────┘
                        │
                        ▼
┌─────────────────────────────────────────────────┐
│  Generate multiple ground-truth latent            │
│  representations                                  │
│                      504                          │
└─────────────────────────────────────────────────┘
                        │
                        ▼
┌─────────────────────────────────────────────────┐
│  Add noise to each ground-truth latent            │
│  representation to generate a training input      │
│                      506                          │
└─────────────────────────────────────────────────┘
                        │
                        ▼
┌─────────────────────────────────────────────────┐
│  For each corresponding training input            │
│                                                   │
│    ┌──────────────────────────────────────┐       │
│    │   Generate a training denoising output │      │
│    │                 508                    │      │
│    └──────────────────────────────────────┘       │
└─────────────────────────────────────────────────┘
                        │
                        ▼
┌─────────────────────────────────────────────────┐
│  Determine updates to the parameters of the       │
│  latent denoising neural network                  │
│                      510                          │
└─────────────────────────────────────────────────┘
```

FIG. 5

| Method | FVD↓ |
|---|---|
| MoCoGAN-HD [71] | 2606.5 |
| DIGAN [88] | 2293.7 |
| StyleGAN-V [65] | 1773.4 |
| PVDM [87] | 505.0 |
| Temporal sequence generation system | **305.0** |

| Method | FVD↓ | PSNR↑ | SSIM↑ | LPIPS↓ |
|---|---|---|---|---|
| Perceiver AR [32] | 1022 | 13.4 | 0.310 | 0.404 |
| Latent FDM [31] | 960 | 13.2 | 0.334 | 0.413 |
| TECO [81] | 799 | 13.8 | 0.341 | 0.381 |
| Temporal sequence generation system | **340** | **14.9** | **0.410** | **0.300** |

FIG. 6

EP 4 660 879 A1

Europäisches
Patentamt

European
Patent Office

Office européen
des brevets

# EUROPEAN SEARCH REPORT

**Application Number**

EP 25 18 1284

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Gupta Agrim ET AL: "Photorealistic Video Generation with Diffusion Models", arXiv.org, 11 December 2023 (2023-12-11), pages 1-13, XP093328655, Retrieved from the Internet: URL:https://arxiv.org/abs/2312.06662 [retrieved on 2025-10-24] | 1-12,14, 15 | INV. G06N3/0455 G06N3/0475 |
| A | * abstract; sections 3, 4.1, 4.2, 4.3, 4.4, 5.1,; figures 1, 2 * ----- | 13 | |
| A | Ma Xin ET AL: "Latte: Latent Diffusion Transformer for Video Generation", , 5 January 2024 (2024-01-05), pages 1-16, XP093271425, Retrieved from the Internet: URL:https://arxiv.org/abs/2401.03048v1 [retrieved on 2025-10-24] * abstract; sections 3, 4; figures 2, 3, 4 * ----- | 1-15 | |
| A | Yu Lijun: "LANGUAGE MODEL BEATS DIFFUSION -TOKENIZER IS KEY TO VISUAL GENERATION", , 29 March 2024 (2024-03-29), XP093248208, Retrieved from the Internet: URL:https://arxiv.org/abs/2310.05737 [retrieved on 2025-10-24] * abstract; section 3 * ----- -/-- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 24 October 2025 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 25 18 1284

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANDREW MELNIK ET AL: "Video Diffusion Models: A Survey", ARXIV.ORG, CORNELL UNIVERSITY LIBRARY, 201 OLIN LIBRARY CORNELL UNIVERSITY ITHACA, NY 14853, 6 May 2024 (2024-05-06), XP091748539, * abstract; sections 4, 5 * | 1-15 | |

TECHNICAL FIELDS
SEARCHED      (IPC)

The present search report has been drawn up for all claims

| Place of search | Date of completion of the search | Examiner |
|---|---|---|
| The Hague | 24 October 2025 | Tebbal Barracosa, B |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

page 2 of 2

**EP 4 660 879 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RAFFEL et al.** Exploring the Limits of Transfer Learning with a Unified Text-to-Text Transformer. *arXiv preprint arXiv:1910.10683*, 2019
- **DEVLIN**. BERT: Pre-training of Deep Bidirectional Transformers for Language Understanding. *arXiv preprint arXiv: 1810.04805*, 2018
- **GUPTA et al.** Photorealistic Video Generation with Diffusion Models. *arXiv preprint arXiv:2312.06662*, 2023

- **YU et al.** Language Model Beats Diffusion - Tokenizer is Key to Visual Generation. *arXiv preprint arXiv:2310.05737*, 2024
- **J. SON et al.** Denoising Diffusion Implicit Models. *ICLR*, 2021
- **J. HO et al.** Denoising Diffusion Probabilistic Models. *NeurIPS*, 2020
- **DOSOVITSKIY et al.** An Image is Worth 16x16 Words: Transformers for Image Recognition at Scale. *arXiv preprint arXiv:2010.11929*, 2020

30